# EUROPÄISCHE PATENTANMELDUNG

(11) **EP 1 513 120 A2**
(43) Veröffentlichungstag der Anmeldung: **09.03.2005**
(21) Anmeldenummer: 04006262.2
(22) Anmeldetag: 16.03.2004
(51) Int. Cl.: G07F 19/00

(54) **Verfahren zum Initiieren eines Bezahlvorgangs für Produkte und System zum Durchführen eines Bezahlvorgangs**

(30) Priorität: 04.09.2003 DE 10340871
(71) Anmelder: fun communications GmbH, 76135 Karlsruhe (DE)
(72) Erfinder: Nahr, Klaus, 76133 Karlsruhe (DE)
(74) Vertreter: Reitstötter - Kinzebach & Partner (GbR)

(57) **Zusammenfassung**

Die vorliegende Erfindung betrifft ein Verfahren zum Initiieren eines Bezahlvorgangs für Produkte. Bei dem erfindungsgemäßen Verfahren wird ein Code (5), aus dem zumindest der zu zahlende Betrag ermittelbar ist, mittels einer Verkäufereinrichtung (3) angezeigt, eine optische Erfassungseinrichtung (2) des Käufers erfasst den Code (5) optisch und der erfasste Code (5) oder aus dem Code (5) abgeleitete Daten werden von einer mobilen Telekommunikationseinrichtung (1) des Käufers an eine externe Einheit (9) zum Abwickeln des Bezahlvorgangs übertragen. Ferner betrifft die Erfindung ein System zum Durchführen eines Bezahlvorgangs für Produkte. Dieses System ist gekennzeichnet durch eine Anzeigeeinrichtung (4), die einen Code (5), aus dem zumindest der zu zahlende Betrag ermittelbar ist, anzeigt, eine optische Erfassungseinrichtung (2) des Käufers, mit welcher der angezeigte Code (5) optisch erfassbar ist, eine mobile Telekommunikationseinheit (1) des Käufers, die mit der optischen Erfassungseinrichtung (2) gekoppelt ist und mit welcher der erfasste Code (5) oder aus dem Code (5) abgeleitete Daten drahtlos übertragbar ist/sind, und eine externe Einheit (9) zum Abwickeln des Bezahlvorgangs, mit der die von der mobilen Telekommunikationseinheit (1) des Käufers übertragenen Daten empfangbar sind und die mit einer Verkäufereinrichtung (3) zum Übertragen einer Bestätigung des Bezahlvorgangs gekoppelt ist.

## Beschreibung

Die vorliegende Erfindung betrifft ein Verfahren zum Initiieren eines Bezahlvorgangs für Produkte, ein Verfahren zum Bezahlen von Produkten sowie ein System zum Durchführen eines Bezahlvorgangs für Produkte.

Bezahlvorgänge werden beim Kauf von Waren oder bei der Inanspruchnahme von Dienstleistungen durchgeführt. Herkömmlicherweise erfolgt der Bezahlvorgang am sogenannten "point of sale" (POS) durch die Übergabe von Geld. Außerdem werden Bezahlvorgänge mittels Bank- oder Kreditkarten abgewickelt, welche der Käufer dem Verkäufer übergibt. Dieser prüft üblicherweise anhand der Bank- oder Kreditkarte die Gültigkeit und Kreditwürdigkeit des Käufers. Er lässt sich außerdem den Zahlungsvorgang vom Käufer durch eine Unterschrift oder die Eingabe einer persönlichen Identifikationsnummer (PIN) bestätigen.

Des Weiteren sind Bezahlverfahren bekannt, die ein Mobiltelefon des Käufers benutzen. Bei einem unter dem Namen PAYBOX bekannt gewordenen Verfahren übermittelt der Käufer seine Mobiltelefon-Nummer an den Verkäufer. Der Verkäufer stellt daraufhin über eine Telekommunikationseinrichtung, wie z. B. über sein Mobiltelefon oder eine mit einem Modem ausgestattete elektronische Kasse, eine Verbindung zu einer externen Einheit her und überträgt dieser die Mobiltelefon-Nummer des Käufers, den zu zahlenden Geldbetrag und seine eigenen Identifikationsdaten. Die externe Einheit ruft daraufhin den Käufer unter seiner Mobiltelefon-Nummer an und nennt ihm den Zahlungsempfänger und den zu zahlenden Betrag. Der Käufer kann daraufhin die Transaktion durch Eingabe einer persönlichen Identifikationsnummer freigeben.

Nachteilhaft an diesem Verfahren ist, dass die Telekommunikationskosten relativ hoch sind, da sowohl mit dem Käufer als auch mit dem Verkäufer eine Telekommunikationsverbindung hergestellt werden muss und während des gesamten Bezahlverfahrens aufrechterhalten bleibt.

Ein weiteres Bezahlverfahren ist in der DE 198 43 439 C2 beschrieben. Der Bezahlvorgang erfolgt hier über eine Kommunikation zwischen einer Basistelekommunikationsstation des Verkäufers, dem Mobiltelefon des Käufers und einer Telekommunikationseinrichtung eines Geldinstituts. Die Basistelekommunikationsstation des Verkäufers sendet die zum Bezahlen erforderlichen Daten per Funk an das Mobiltelefon des Käufers. Das Mobiltelefon fragt beim Benutzer eine Bestätigung für die Bezahlung ab. Daraufhin erfolgt eine Authentifikation des Benutzers. Ergibt sich die Berechtigung des Benutzers wird der Bezahlvorgang von dem Mobiltelefon wie bei einem herkömmlichen Mobiltelefonbankingverfahren ausgeführt, in dem Bezahlanweisungsdaten von dem Mobiltelefon an die Telekommunikationseinrichtung des Geldinstituts gesandt werden.

Nachteilhaft an diesem Verfahren ist, dass alle Verkaufsstellen, bei denen mit diesem System bezahlt werden kann, mit der Basistelekommunikationsstation ausgestattet sein müssen, damit eine Telekommunikationsverbindung zu dem Mobiltelefon des Käufers hergestellt werden kann. Dies verursacht bei der Einführung des Systems sehr hohe Investitionskosten. Außerdem sind die Betriebskosten des Systems relativ hoch, da bei einem Bezahlvorgang sowohl eine Telekommunikationsverbindung von der Basistelekommunikationsstation des Verkäufers zu dem Mobiltelefon des Käufers als auch eine Verbindung zu der Telekommunikationseinrichtung einer externen Einheit hergestellt werden muss.

Es ist die Aufgabe der vorliegenden Erfindung, ein Verfahren zum Initiieren eines Bezahlvorgangs für Produkte, ein Verfahren zum Bezahlen von Produkten sowie ein System zum Durchführen eines Bezahlvorgangs für Produkte vorzuschlagen, bei denen der Bezahlvorgang einfach und kostengünstig initiiert bzw. durchgeführt werden kann.

Diese Aufgabe wird durch ein Verfahren zum Initiieren eines Bezahlvorgangs mit den Merkmalen des Anspruchs 1, ein Verfahren zum Bezahlen von Produkten mit den Merkmalen des Anspruchs 14 und ein System zum Durchführen eines Bezahlvorgangs für Produkte mit den Merkmalen des Anspruchs 17 gelöst. Vorteilhafte Aus- und Weiterbildungen ergeben sich aus den Unteransprüchen.

Bei dem erfindungsgemäßen Verfahren zum Initiieren eines Bezahlvorgangs für Produkte, wird ein Code, aus dem zumindest der zu zahlende Betrag ermittelbar ist, mittels einer Verkäufereinrichtung angezeigt, eine optische Erfassungseinrichtung des Käufers erfasst optisch den Code und der erfasste Code oder aus dem Code abgeleitete Daten wird bzw. werden von einer mobilen Telekommunikationseinheit des Käufers an eine externe Einheit zum Abwickeln des Bezahlvorgangs übertragen.

Vorteilhaft an dem erfindungsgemäßen Verfahren ist, dass der Austausch der für den Bezahlvorgang relevanten Daten zwischen der Einrichtung des Verkäufers und der Einrichtung des Käufers sehr einfach und schnell erfolgen kann. Es reicht aus, dass von Verkäuferseite ein Code mit den relevanten Daten angezeigt wird. Herkömmliche elektronische Kassen weisen üblicherweise eine Anzeigeeinrichtung auf, welche den Code ohne weiteres anzeigen kann. Ferner reicht es auch von Verkäuferseite aus, dass der Code auf die jeweilige Ware aufgedruckt und somit direkt von dieser angezeigt wird. Derartige Codierungen an Waren werden bereits benutzt, so dass hier keine Investitionskosten für die Einführung des Verfahrens aufgebracht werden müssen. Von Käuferseite ist es erforderlich, den Code optisch zu erfassen. Falls dies mit Einrichtungen erfolgen kann, welche der Käufer üblicherweise auch für andere Anwendungen mit sich führt, sind auch hier keine separaten Geräte zur Durchführung des Verfahrens erforderlich. Vorteilhafterweise kann die optische Erfassung des Codes sehr einfach und schnell durchgeführt werden, wodurch der Bezahlvorgang beschleunigt wird. Außerdem fallen bei der optischen Erfassung des Codes keine weiteren Kosten an, sofern die entsprechenden Geräte bereits vorhanden sind.

Gemäß einer bevorzugten Ausgestaltung des erfindungsgemäßen Verfahrens überträgt die Verkäufereinrichtung zumindest den zu zahlenden Betrag an die externe Einheit und fordert dabei eine Transaktions-Identifikation bei der externen Einheit an. Die externe Einheit erzeugt eine Transaktions-Identifikation sowie einen dieser Transaktions-Identifikation zugeordneten Code und überträgt der Verkäufereinrichtung zumindest den Code. Die Verkäufereinrichtung zeigt den Code dann an. Gemäß einer anderen Ausgestaltung erzeugt die externe Einheit eine Transaktions-Identifikation, aus welcher der anzuzeigende Code gewinnbar ist, und überträgt der Verkäufereinrichtung die Transaktions-Identifikation. Die Verkäufereinrichtung gewinnt aus der Transaktions-Identifikation den Code und zeigt diesen dann an.

Gemäß einer Weiterbildung dieser Ausgestaltungen gewinnt die mobile Telekommunikationseinrichtung des Käufers aus dem Code die zugeordnete Transaktions-Identifikation und überträgt diese an die externe Einheit zum Abwickeln des Bezahlvorgangs. Die externe Einheit ordnet dann vorzugsweise der von der Telekommunikationseinreichung des Käufers übertragenen Transaktions-Identifikation eine zuvor erzeugte und an eine Verkäufereinrichtung übertragene Transaktions-Identifikation zu und ermittelt daraus den zu zahlenden Betrag.

Vorteilhaft an diesen Ausgestaltungen ist, dass es ausreicht, dass die Transaktions-Identifikation über den optischen Code von der Verkäufereinrichtung an die Telekommunikationseinrichtung des Käufers optisch übertragen wird. Weitere die Verkäufereinrichtung betreffende Daten müssen nicht übertragen werden, da in der externen Einheit eine Verbindung der Transaktions-Identifikation zu der Verkäufereinrichtung, die diese Transaktions-Identifikation erhalten hat, gespeichert ist. Erhält die externe Einheit von der Telekommunikationseinrichtung des Käufers die entsprechende Transaktions-Identifikation, kann sie sehr einfach alle relevanten Daten der registrierten Verkäufereinrichtung gewinnen.

Gemäß einer weiteren bevorzugten Ausgestaltung des erfindungsgemäßen Verfahrens überträgt die externe Einheit den zu zahlenden Betrag an die Telekommunikationseinrichtung des Käufers. Die Telekommunikationseinrichtung des Käufers überträgt eine Bestätigung für die vorzunehmende Zahlung dann zusammen mit Daten, die mitteilen, wie die Zahlung vorgenommen werden soll, an die externe Einheit. Durch diese Ausgestaltung wird die Flexibilität und die Sicherheit des erfindungsgemäßen Verfahrens erhöht. Dem Käufer ist es möglich, über seine Telekommunikationseinrichtung eine Vielzahl von Konten oder Kreditkarten für die Bezahlung zu verwenden, ohne die benötigten zugehörigen Daten, wie Bankverbindung, PINs und TANs auswendig zu wissen. Diese Daten können nämlich in der Telekommunikationseinrichtung gespeichert sein. Auch bei einem Verlust der Telekommunikationseinrichtung entsteht kein Sicherheitsproblem, sofern die Einrichtung gesperrt oder ausgeschaltet ist. Alle vertraulichen Daten werden von der Anwendung verschlüsselt gespeichert und die Anwendung mit einem optionalen Passwort gesichert. Ferner wird die Sicherheit dadurch erhöht, dass die Verkäufereinrichtung nicht über Bank- oder Kontoverbindungsdaten des Käufers verfügt. Diese Daten liegen nur bei der externen Einheit vor.

Gemäß einer anderen Ausgestaltung des erfindungsgemäßen Verfahrens wird der zu zahlende Betrag in Form des Codes mittels der Verkäufereinrichtung angezeigt. Diese Ausgestaltung hat den Vorteil, dass die Verkäufereinrichtung den Code für jede Ware oder Dienstleistung unmittelbar anzeigen kann, ohne zuvor eine Transaktions-Identifikation oder dgl. von der externern Einheit anzufordern.

Der Code kann vorzugsweise weitere Informationen, die für den Bezahlvorgang relevant sind, umfassen. Dies ist insbesondere eine Verkäuferidentifikation. Ferner sind dies beispielsweise die Währung des zu zahlenden Betrags, die akzeptierten Bezahlverfahren, die Verbindungsdaten der externen Einrichtung, eine Prüfsumme und/oder eine Transaktionsidentifikation. Sind diese Informationen bereits im Code enthalten, ist es nicht erforderlich, diese manuell oder in einem weiteren Schritt an die externe Einheit zum Abwickeln des Bezahlvorgangs zu übertragen. Alle für die Durchführung des Bezahlvorgangs nötigen Daten werden in einem einzigen Schritt durch die optische Erfassungseinrichtung des Käufers erfasst und über eine mobile Telekommunikationseinrichtung, wie z. B. ein Mobiltelefon, an die externe Einheit übertragen.

Gemäß einer bevorzugten Ausgestaltung des erfindungsgemäßen Verfahrens wird der erfasste Code decodiert und angezeigt. Die Übertragung des erfassten Codes oder der aus dem Code abgeleiteten Daten von dem Mobiltelefon des Käufers an die externe Einheit zum Abwickeln des Bezahlvorgangs erfolgt in diesem Fall erst nach einer Bestätigung durch den Käufer. Dieser kann beispielsweise eine persönliche Identifikationsnummer zur Freigabe der Zahlung in sein Mobiltelefon eingeben. Durch diesen Schritt wird ein Missbrauch des erfindungsgemäßen Verfahrens durch einen nicht berechtigten Käufer verhindert.

Gemäß einer bevorzugten Weiterbildung des erfindungsgemäßen Verfahrens werden von der Telekommunikationseinheit des Käufers ferner eine Käuferidentifikation, Daten zur Art des Bezahlvorgangs und/oder ein Sicherheitscode übertragen. Diese Daten können insbesondere zusammen mit dem erfassten Code an die externe Einheit übertragen werden. Die Käuferidentifikation erfolgt bevorzugt automatisch bei der Herstellung einer Mobilfunkverbindung. Die Art des Bezahlverfahrens, d.h. beispielsweise ob die Bezahlung durch eine Überweisung, eine Lastschrift, per elektronischem Scheck oder per Kreditkarte erfolgen soll, wählt der Käufer in seinem Mobiltelefon aus, nachdem ihm die möglichen Bezahlverfahren angezeigt worden sind. Als Sicherheitscode kann beispielsweise eine Transaktionsnummer (TAN) an die externe Einheit übertragen werden.

Gemäß einer bevorzugten Ausgestaltung des Verfahrens wird der Code mit einer Digitalkamera fotografiert. Bei dem Code kann es sich insbesondere um einen Strichcode handeln. Ferner kann der Code in Symbolform angezeigt werden. Dabei sollte die Anzeige so erfolgen, dass eine Decodierung einer Fotografie des Abbildes eines Röhrenmonitors, welcher den Code anzeigt, möglich ist. Nachdem der Code mit einer Digitalkamera fotografiert worden ist, liegt in der optischen Erfassungseinrichtung des Käufers eine Bilddatei vor, die mit herkömmlicher Software sehr einfach und schnell analysiert werden kann. Diese Analyse wird vereinfacht, wenn der Code ein Strichcode ist. Außerdem können in diesem Fall bereits vorhandene Codierungen für Barcodescanner für die erfindungsgemäße Initiierung des Bezahlvorgangs genutzt werden. Weitere Möglichkeiten der optischen Codierung, wie sie erfindungsgemäß bei der Anzeige der Verkäufereinrichtung verwendet werden können, sind in der Veröffentlichung EAN-UCC - The Global Language of Business; Coorganisation 3/2003, Seiten 20 bis 22 beschrieben.

Bei dem erfindungsgemäßen Verfahren zum Bezahlen von Produkten wird der Bezahlvorgang in der vorstehenden beschriebenen Weise initiiert. Der Bezahlvorgang wird mittels der externen Einheit anhand der von der mobilen Telekommunikationseinheit des Käufers übertragenen Daten ausgeführt oder ausgelöst. Die externe Einheit überträgt danach eine Bestätigung zumindest an die Verkäufereinrichtung. Des Weiteren kann die externe Einheit eine Bestätigung an die Telekommunikationseinrichtung des Käufers übertragen. Für die Auslösung bzw. Ausführung des Bezahlvorgangs kann die externe Einrichtung eine Verbindung mit dem Finanzinstitut des Käufers oder dem Finanzinstitut des Verkäufers herstellen und eine Überweisung, eine Lastschrift oder einen elektronischen Scheck des in dem Code enthaltenden Betrags vom Konto des Käufers auf eine Konto des Verkäufers anweisen. Ferner kann die externe Einrichtung eine Kreditkartenbelastung der Kreditkarte des Käufers mit dem in dem Code enthaltenen Betrag veranlassen.

Das erfindungsgemäße System zum Durchführen eines Bezahlvorgangs für Produkte ist gekennzeichnet durch eine Anzeigeeinrichtung, die einen Code, aus dem zumindest der zu zahlende Betrag ermittelbar ist, anzeigt, eine optische Erfassungseinrichtung des Käufers, mit welcher der angezeigte Code optisch erfassbar ist, eine mobile Telekommunikationseinheit des Käufers, die mit der optischen Erfassungseinrichtung gekoppelt ist und mit welcher der erfasste Code oder aus dem Code abgeleitete Daten drahtlos übertragbar ist bzw. sind, und eine externe Einheit zum Abwickeln des Bezahlvorgangs, mit der die von der mobilen Telekommunikationseinheit des Käufers übertragenen Daten empfangbar sind und die mit einer Verkäufereinrichtung zum Übertragen einer Bestätigung des Bezahlvorgangs gekoppelt ist. Wird das System für eine Vielzahl von Verkäufern betrieben, kann der von der Anzeigeeinrichtung angezeigte Code außerdem eine Verkäuferidentifikation enthalten.

Die Anzeigeeinrichtung ist mit einer Verkäufereinrichtung gekoppelt, welche die Anzeige des Codes steuert. Die Anzeigeeinrichtung ist beispielsweise eine Bildschirmanzeige einschließlich eines Flachbild- oder Röhrenmonitors. Sie kann insbesondere mit einer elektronischen Kasse gekoppelt sein. Des Weiteren wird unter der Anzeigeeinrichtung auch der Aufdruck des Codes auf der Ware verstanden.

Gemäß einer bevorzugten Weiterbildung des erfindungsgemäßen Systems sind die optische Erfassungseinrichtung und die mobile Telekommunikationseinrichtung des Käufers in einem Mobiltelefon mit einer Digitalkamera zusammengefasst. Derartige Mobiltelefone sind immer weiter verbreitet, so dass für die Einführung des erfindungsgemäßen Systems keine gesonderten Investitionskosten für diese Einrichtungen aufzubringen sind.

Das verwendete Mobiltelefon ist vorzugsweise so ausgebildet, dass eine Installation von Zusatzsoftware möglich ist. Auf diese Weise können die Verfahrensschritte zum Durchführung des Bezahlvorgangs, welche auf Käuferseite abzuwickeln sind, durch die in dem Mobiltelefon des Käufers installierten Software automatisch ablaufen. Dies macht den Bezahlvorgang für den Käufer sehr einfach. Außerdem wird hierdurch der Bezahlvorgang beschleunigt, da auf Käuferseite keine unnötigen Eingaben in das Mobiltelefon zu machen sind. Die Zusatzsoftware lässt sich beispielsweise durch eine direkte Kabelverbindung, durch das Herunterladen aus dem Internet, durch eine Infrarotverbindung oder über eine Bluetooth-Verbindung übertragen. Damit ist die Übertrag und Installation der Zusatzsoftware sehr einfach und in wenigen Schritten abgeschlossen. Hierdurch wird die Benutzerfreundlichkeit des erfindungsgemäßen Systems erhöht.

Des Weiteren besitzt das erfindungsgemäße Verfahren und das erfindungsgemäße System den Vorteil, dass es sehr verlässlich ist, da alle Funktionen und Abläufe auf bereits verwendeten Standards aufbauen und bereits bewährte Programme Anwendung finden können. Ferner kann der Käufer vor dem Verkäufer vorteilhafterweise anonym gehalten werden, sofern es sich bei der Verkaufsware um ein digitales Gut handelt, das elektronisch übermittelt werden kann oder die Ware direkt an einer Verkaufsstelle gekauft wird. Schließlich ist das erfindungsgemäße Verfahren sehr kostengünstig. Dem Anwender entstehen sehr geringe Zusatzkosten, die beispielsweise nur durch die Internetverbindung zur externen Einheit verursacht werden.

Die Erfindung wird nun anhand von Ausführungsbeispielen mit Bezug zu den Figuren erläutert.

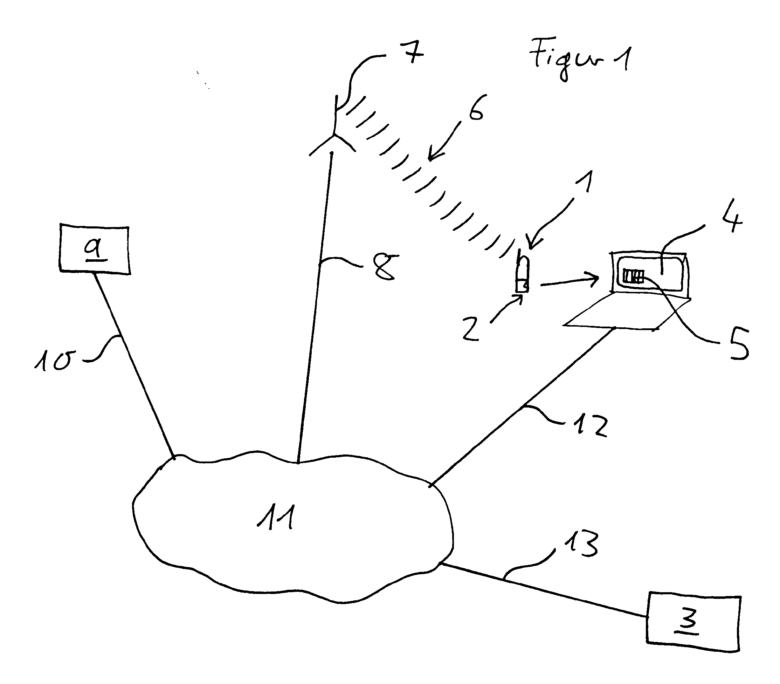

Figur 1 zeigt schematisch ein erstes Ausführungsbeispiel des erfindungsgemäßen Verfahrens und Systems zum Durchführen eines Bezahlvorgangs für Produkte und
Figur 2 zeigt schematisch ein zweites Ausführungsbeispiel des erfindungsgemäßen Verfahrens.

Das System umfasst auf Verkäuferseite eine Einrichtung 3, mittels derer ein Code 5 angezeigt werden kann. Dies kann beispielsweise ein Bildschirmanzeigegerät im stationären Handel oder in der Gastronomie sein. Für Verkäufe im Internet ist es ein Computer des Verkäufers, der eine Webseite erzeugt, welche der Käufer sich auf seinem Computer ansehen kann. Von der Einrichtung 3 sollen jedoch auch Geräte für herkömmliche Warenkennzeichnungen umfasst sein, durch die ein Code 5 auf eine Ware aufgedruckt wird, so dass der Code auf diese Weise dem Käufer angezeigt wird.

Im Folgenden wird als erstes Ausführungsbeispiel der Kauf eines Produkts über das Internet erläutert. In diesem Fall ist die Verkäufereinrichtung ein Provider, der die auf dem Bildschirm 4 des Computers des Käufers angezeigte Webseite bereitstellt. Die Darstellung des Codes 5 auf dem Bildschirm 4 erfolgt derart, dass sich der Code 5 beim Abfotografieren des Bildschirms 4 zuverlässig decodieren lässt. Beispielsweise kann ein herkömmlicher Strichcode verwendet werden. Außerdem können verschiedene Symbole angezeigt werden. In diesem Fall ist jedoch zu berücksichtigen, dass beim Fotografieren des Abbilds eines Röhrenmonitors große Teile des Bildes aufgrund der Synchronisierung in der Fotografie schwarz erscheinen. Die Anzeige muss daher so erfolgen, dass sich der Code auch bei der Verwendung eines Röhrenmonitors decodieren lässt.

Der Code 5 enthält zumindest Informationen über den Betrag des auszuführenden Bezahlvorgangs. Da das Bezahlverfahren bei einer Vielzahl von Verkäufern eingesetzt werden kann, enthält der Code 5 außerdem eine Identifikation des Verkäufers. Falls, wie bei einem Verkauf im Internet, verschiedene Währungen in Betracht kommen, sollte der Code außerdem die Währung enthalten. Gibt es verschiedene Optionen für den Bezahlvorgang, können in dem Code außerdem die verschiedenen Arten der akzeptieren Bezahlverfahren enthalten sein oder ein bereits am Käufercomputer ausgewähltes Bezahlverfahren. Zu Buchhaltungszuordnungszwecken kann in dem Code außerdem ein Verwendungszweck bzw. eine Rechnungsnummer sowie eine Transaktionsidentifikation enthalten sein. Um etwaige Decodierfehler zu erkennen, kann der Code 5 noch eine Prüfsumme enthalten. Schließlich kann noch die Internetadresse des Zahlungsdienstleisters in dem Code enthalten sein.

Auf Käuferseite sind eine optische Erfassungseinrichtung und eine mobile Telekommunikationseinrichtung vorgesehen. Die optische Erfassungseinrichtung kann eine Digitalkamera, ein Scanner, ein Barcodeleser oder dgl. sein. Es ist jede Einrichtung geeignet, welche den von Verkäuferseite angezeigten Code 5 optisch erfassen kann.

Gemäß dem Ausführungsbeispiel der Erfindung sind die optische Erfassungseinrichtung und die mobile Telekommunikationseinrichtung des Käufers zu einem Mobiltelefon 1, in welches eine Digitalkamera 2 integriert ist, zusammengefasst. Derartige Mobiltelefone 1 sind immer weiter verbreitet. Das Mobiltelefon 1 und die Kamera 2 könnten jedoch auch über eine Steck-, Kabel- oder Funkverbindung miteinander kommunizieren. Ferner erlaubt das Mobiltelefon 1 die Installation zusätzlicher Software, welche die Durchführung des erfindungsgemäßen Verfahrens unterstützt. Außerdem kann als optische Erfassungseinrichtung und mobile Telekommunikationseinrichtung ein Mobiltelefon 1 mit einem Barcodeleser vorgesehen sein. Das Mobiltelefon 1 kann über einen Telekommunikationsproviders 7 und dem Internet 11 eine Verbindung 6, 8 zu einem externern Server 9 des Zahlungsdienstleisters aufbauen. Über diese Verbindung 6, 8 kann das Mobiltelefon 1 Daten an den externen Server 9 übertragen. Der externe Server 9 ist hierfür auch über eine Leitung 10 mit dem Internet 11 verbunden. Gleichermaßen ist die Verkäufereinrichtung 3 über die Leitung 13 und der Computer des Käufers über die Leitung 12 mit dem Internet 11 verbunden. Der externe Server 9 kann somit über das Internet 11 mit der Verkäufereinrichtung 3 und dem Computer des Käufers kommunizieren. Diese Kommunikation muss jedoch nicht notwendigerweise über das Internet 11 erfolgen. Es ist hier auch jede andere Art des Datenaustausches denkbar.

Im Folgenden wird das erste Ausführungsbeispiel des Verfahrens zum Initiieren eines Bezahlvorgangs für ein Produkt sowie das Verfahren zum Bezahlen des Produkts erläutert:

Der Käufer installiert eine von dem Zahlungsdienstleister oder einem Verkäufer bereitgestellte Software auf seinem Mobiltelefon 1 und konfiguriert dieses einmalig, in dem er Daten, die für die Abwicklung des Bezahlvorgangs erforderlich sind, in dem Mobiltelefon 1 speichert. Zu diesen Daten zählen unter anderem für einen Bezahlvorgang per Kreditkarte die Kreditkartengesellschaft, die Kreditkartennummer, das Ablaufdatum der Kreditkarte, der Name des Kreditkarteninhabers sowie die Kontrollziffer. Soll die Bezahlung durch eine Überweisung erfolgen, werden die Bankleitzahl und die Kontonummer des Käufers gespeichert sowie seine persönliche Identifikationsnummer (PIN) und eine Anzahl von Transaktionsnummern (TANs). Soll die Bezahlung per Lastschriftverfahren durchgeführt werden, reicht es, die Bankleitzahl und Kontonummer des Käufers auf dem Mobiltelefon 1 zu speichern.

Gemäß einer anderen Variante registriert sich der Käufer zunächst beim Zahlungsdienstleister, der bestimmte Daten des Käufers auf dem Server 9 speichert. Zu diesen Daten zählen die Mobiltelefonnummer des Käufers und vorstehend aufgeführten Daten, die für die Abwicklung des Bezahlvorgangs erforderlich sind.

Nachdem das Mobiltelefon 1 des Käufers konfiguriert ist bzw. die Daten auf dem Server 9 gespeichert sind, wird der Bezahlvorgang initiiert:

Der Käufer will beispielsweise das Angebot eines Verkäufers für den Kauf einer Ware im Internet nutzen. Der Verkäufer stellt hierfür eine Webseite bereit, auf der ein Strichcode 5 enthalten ist, welcher dem zu kaufenden Produkt zugeordnet ist. Dieser Code 5 wird auf dem Computer des Käufers angezeigt. Er enthält zumindest den zu zahlenden Betrag. Bieten mehrere Verkäufer das Bezahlverfahren an, ist in dem Code 5 auch eine Verkäuferidentifikation enthalten. Außerdem kann der Code 5 die vorstehend angegebenen Daten enthalten. Will der Käufer das dem Code 5 zugeordnete Produkt kaufen, startet er die auf seinem Mobiltelefon 1 installierte Anwendung des Zahlungsdienstleisters und fotografiert mit der Digitalkamera 2 seines Mobiltelefons 1 den auf dem Bildschirm 4 angezeigten Code 5. Die auf dem Mobiltelefon 1 ablaufende Anwendung decodiert daraufhin das von der Digitalkamera 2 aufgenommene Bild und zeigt die in dem Code 5 enthaltenen Informationen dem Käufer nochmals auf dem Display des Mobiltelefons 1 an. Enthalten die Informationen verschiedene Auswahlmöglichkeiten, kann der Käufer noch auf seinem Mobiltelefon 1 eine entsprechende Auswahl treffen. Beispielsweise kann er die Art des Bezahlverfahrens (Kreditkarte, Überweisung, Lastschrift, elektronischer Scheck oder andere Verfahren) auswählen.

Danach bestätigt der Käufer die Initiierung des Bezahlvorgangs auf seinem Mobiltelefon 1. Dies kann durch einen einfachen Tastendruck erfolgen. Es kann jedoch auch erforderlich sein, eine spezielle für den Bezahlvorgang vorgesehene persönliche Identifikationsnummer in das Mobiltelefon 1 einzugeben. Schließlich kann es optional noch erforderlich sein, für jede Transaktion eine gesonderte Transaktionsnummer (TAN) einzugeben. Es ist jedoch auch möglich, dass die Anwendung eine in dem Mobiltelefon 1 gespeicherte Transaktionsnummer automatisch auswählt.

Die auf dem Mobiltelefon 1 ablaufende Anwendung baut daraufhin, z. B. über GPRS oder UMTS, eine Verbindung zum Telekommunikationsprovider 7 und von diesem über das Internet 11 zum externen Server 9 des Zahlungsdienstleisters auf und überträgt die in dem Code 5 enthaltenen Daten sowie ggf. in dem Mobiltelefon 1 gespeicherte oder zusätzlich eingegebene Zusatzdaten an den externen Server 9. Die hierfür erforderliche Adresse des externern Servers kann beispielsweise in dem Code 5 enthalten sein oder in der auf dem Mobiltelefon 1 ablaufenden Anwendung. Damit ist die Initiierung des Bezahlvorgangs abgeschlossen. Der eigentliche Bezahlvorgang und die Bestätigung darüber kann danach von dem externen Server 9 abgewickelt werden.

Im Folgenden wird ein Beispiel für die Durchführung eines solchen Bezahlvorgangs erläutert.

Werden alle zur Durchführung des Bezahlvorgangs erforderlichen Daten von dem Mobiltelefon 1 an den Server 9 übertragen, analysiert der Server 9 die Daten und stellt die Daten für den jeweiligen Bezahlvorgang zusammen. Sind die zur Durchführung des Bezahlvorgangs erforderlichen Daten zumindest teilweise auf dem Server 9 gespeichert, erfasst der Server 9 zunächst die Anruferkennung des Mobiltelefons 1 und prüft, ob ein Käufer autorisiert ist, über dieses Mobiltelefon 1 Zahlungsaufträge zu übertragen. Wird festgestellt, dass eine entsprechende Autorisierung vorliegt, analysiert der Server 9 die ihm von dem Mobiltelefon 1 übertragenen Daten. Es wird geprüft, welche Art des Bezahlvorgangs ausgeführt werden soll. Daraufhin werden die Daten für den Bezahlvorgang zusammengestellt. Hierbei kann der Server 9 entweder nur die von dem Mobiltelefon 1 übertragenen Daten verwenden oder sie mit bereits für den Käufer gespeicherten Daten kombinieren.

Der Server 9 stellt dann eine Verbindung zu dem Finanzinstitut des Käufers oder dem des Verkäufers her und überträgt die Zahlungsaufträge. Gegebenenfalls erhält der Server 9 noch eine Bestätigung vom Finanzinstitut, dass die Zahlung ausgeführt wird. Daraufhin überträgt der externe Server 9 über das Internet 11 an die Verkäufereinrichtung 3 eine Bestätigung, dass der Bezahlvorgang ausgeführt bzw. ausgelöst wurde. Die Verkäufereinrichtung kann dann das Produkt freigeben.

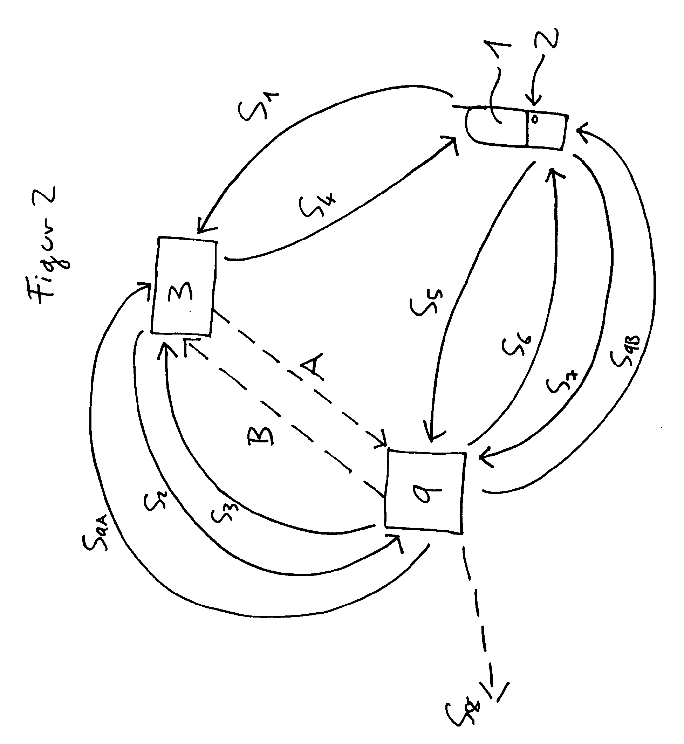

Im Folgenden wird ein zweites Ausführungsbeispiel des Verfahrens zum Initiieren des Bezahlvorgangs für ein Produkt sowie das Verfahren zum Bezahlen des Produkts erläutert. Hinsichtlich der einzelnen Verfahrensschritte wird insbesondere auf die Figur 2 Bezug genommen.

Bevor die Einrichtung 3 des Verkäufers an dem Bezahlverfahren teilnimmt, meldet sie sich bei der externen Einheit 9 an (Schritt A). Hierbei überträgt sie alle für den Bezahlvorgang relevanten Daten an die externe Einheit 9, die sie in einer Datenbank speichert. Dies sind insbesondere Kontoverbindungsdaten des Verkäufers. Die externe Einheit 9 überträgt danach eine Verkäuferidentifikation an die Verkäufereinrichtung 3 (Schritt B).

Der Käufer hat auf seinem Mobiltelefon 1 ein Programm installiert, das automatisch die Schritte des Bezahlvorgangs ausführt. Das Mobiltelefon 1 verfügt eine Digitalkamera 2 und kann eine Internetverbindung aufbauen. Des Weiteren hat der Käufer alle für die Bezahlung relevanten Daten verschlüsselt in dem Mobiltelefon 1 gespeichert. Dies sind insbesondere eine oder mehrere Bankverbindungen mit den dazugehörigen PINs und TANs sowie eine oder mehrere Kreditkartennummern mit den dazugehörigen Sicherheitscodes.

Die weitere Beschreibung des Bezahlverfahrens erfolgt anhand eines Kaufs im Internet. Der Käufer fügt auf der von der Verkäufereinrichtung 3 bereit gestellten Internetseite Waren seinem Warenkauf hinzu. Nachdem der Käufer den Selektionsvorgang abgeschlossen hat, teilt er dies der Verkäufereinrichtung mit, indem er z. B. den Knopf "Bestellung aufgeben" anklickt (Schritt S₁). Daraufhin fordert die Verkäufereinrichtung 3 automatisch eine Transaktions-Identifikation bei der externern Einheit 9 an (Schritt S₂). Dabei überträgt die Verkäufereinrichtung 3 zumindest den Betrag für die Bezahlung sowie die Verkäuferidentifikation an die externe Einheit 9. Gegebenenfalls können auch noch weitere Parameter übertragen werden.

Die externe Einheit 9 erzeugt daraufhin eine eindeutige z. B. alphanumerische Transaktions-Identifikation und überträgt diese an die Verkäufereinrichtung 3 (Schritt S₃). Aus der Transaktions-Identifikation lässt sich von der Verkäufereinrichtung 3 automatisch der anzuzeigende optische Code 5 gewinnen. Gemäß einer Ausgestaltung des Verfahrens gewinnt die Verkäufereinrichtung 3 aus der Transaktions-Identifikation den Code 5 und zeigt diesen dann an. Gemäß einer anderen Ausgestaltung erzeugt die externe Einheit 9 eine Transaktions-Identifikation sowie einen dieser Transaktions-Identifikation zugeordneten Code 5 und überträgt dann zumindest den Code 5 an die Verkäufereinrichtung. Ferner kann selbstverständlich auch die Transaktions-Identifikation an die Verkäufereinrichtung 3 von der externen Einheit 9 übertragen werden. In diesem Fall kann die Verkäufereinrichtung 3 den erhaltenen Code 5 direkt anzeigen.

Der Käufer startet nun die auf seinem Telefon 1 installierte Anwendung für das Bezahlverfahren und richtet die Digitalkamera 2 auf den von der Verkäufereinrichtung 3 angezeigten optischen Code. Einige Sekunden nach dem Start der Anwendung fotografiert die Digitalkamera den angezeigten Code 5 (Schritt S₄). Gegebenenfalls kann der erfasste Code 5 nochmals von dem Mobiltelefon angezeigt werden, um die Aufnahme der Digitalkamera 2 zu überprüfen.

Das Mobiltelefon 1 gewinnt nun aus dem erfassten Code 5 die zugeordnete Transaktions-Identifikation und überträgt diese beispielsweise durch eine Internetverbindung an die externe Einheit 9 (Schritt S₅).

Die externe Einheit 9 prüft nun, ob die übertragene Transaktions-Identifikation freigegeben ist. Hierzu vergleicht sie die übertragene Transaktions-Identifikation mit einer Datenbank, die noch gültige und zuvor an Verkäufereinrichtungen 3 übertragene Transaktions-Identifikationen enthält. Kann der übertragenen Transaktions-Identifikation einer noch offenen Transaktions-Identifikation einer Verkäufereinrichtung 3 zugeordnet werden, wird letztere aus der Datenbank entfernt und die externe Einheit 9 entnimmt der Datenbank die zugeordnete Verkäuferidentifikation mit allen für den Bezahlvorgang relevanten Daten, insbesondere den zu zahlenden Betrag.

Daraufhin überträgt die externe Einheit 9 über das Internet den zu bezahlenden Betrag und ggf. weitere Parameter, wie z.B. Name des Verkäufers, Verwendungszweck, erlaubte Zahlungsarten an das Mobiltelefon 1, welche den Betrag anzeigt (Schritt S₆). Ferner kann auch ein Hinweis auf die Verkäufereinrichtung übertragen werden. Der Käufer gibt die Zahlung dann durch eine Bestätigung des Betrags frei. Dabei kann er ggf. auch eine Bankverbindung bzw. eine Kreditkarte, die für den Bezahlvorgang verwendet werden soll, auswählen. Daraufhin überträgt das Mobiltelefon 1 automatisch die Bestätigung sowie Daten die mitteilen, wie die Zahlung vorgenommen werden soll, d.h. beispielsweise eine Kreditkartennummer oder Bankverbindungsdaten an die externe Einheit 9 (Schritt S₇).

Die externe Einheit 9 löst daraufhin die Überweisung oder Kreditkartenabbuchung, wie dies im ersten Ausführungsbeispiel erläutert wurde, aus (Schritt S₈). Beim erfolgreichen Abschluss des Bezahlvorgangs oder nach der Initiierung der Bezahlung wird eine Bestätigung zumindest an die Verkäufereinrichtung 3 verschickt (Schritt S_{9A}). Ferner wird vorzugsweise auch eine Bestätigung an das Mobiltelefon 1 des Käufers verschickt (Schritt S_{9B}). Der Bezahlvorgang ist nun abgeschlossen und die Internetverbindung des Mobiltelefons 1 kann getrennt werden.

## Patentansprüche

1. Verfahren zum Initiieren eines Bezahlvorgangs für Produkte, bei welchem:
- ein Code (5), aus dem zumindest der zu zahlende Betrag ermittelbar ist, mittels einer Verkäufereinrichtung (3) angezeigt wird,
- eine optische Erfassungseinrichtung (2) des Käufers den Code (5) optisch erfasst und
- der erfasste Code (5) oder aus dem Code (5) abgeleitete Daten von einer mobilen Telekommunikationseinrichtung (1) des Käufers an eine externe Einheit (9) zum Abwickeln des Bezahlvorgangs übertragen wird/werden.

2. Verfahren gemäß Anspruch 1, **dadurch gekennzeichnet, dass**
- die Verkäufereinrichtung (3) zumindest den zu zahlenden Betrag an die externe Einheit (9) überträgt und dabei eine Transaktions-Identifikation bei der externen Einheit (9) anfordert,
- die externe Einheit (9) eine Transaktions-Identifikation sowie einen dieser Transaktions-Identifikation zugeordneten Code (5) erzeugt und der Verkäufereinrichtung (3) zumindest den Code (5) überträgt und
- die Verkäufereinrichtung (3) den Code (5) dann anzeigt.

3. Verfahren gemäß Anspruch 1, **dadurch gekennzeichnet, dass**
- die Verkäufereinrichtung (3) zumindest den zu zahlenden Betrag an die externe Einheit (9) überträgt und dabei eine Transaktions-Identifikation bei der externen Einheit (9) anfordert,
- die externe Einheit (9) eine Transaktions-Identifikation, aus welcher der anzuzeigende Code (5) gewinnbar ist, erzeugt und der Verkäufereinrichtung (3) die Transaktions-Identifikation überträgt,
- dass die Verkäufereinrichtung (3) aus der Transaktions-Identifikation den Code (5) gewinnt und diesen dann anzeigt.

4. Verfahren gemäß Anspruch 2 oder 3, **dadurch gekennzeichnet, dass** die mobile Telekommunikationseinrichtung (1) des Käufers aus dem Code (5) die zugeordnete Transaktions-Identifikation gewinnt und diese an die externe Einheit (9) zum Abwickeln des Bezahlvorgangs überträgt.

5. Verfahren gemäß Anspruch 4, **dadurch gekennzeichnet, dass** die externe Einheit (9) der von der Telekommunikationseinrichtung (1) des Käufers übertragenen Transaktions-Identifikation eine zuvor erzeugte und an eine Verkäufereinrichtung (3) übertragene Transaktions-Identifikation zuordnet und daraus den zu zahlenden Betrag ermittelt.

6. Verfahren gemäß einem der vorstehenden Ansprüche, **dadurch gekennzeichnet, dass**
- die externe Einheit (9) den zu zahlenden Betrag an die Telekommunikationseinrichtung (1) des Käufers überträgt,
- die Telekommunikationseinrichtung (1) des Käufers eine Bestätigung für die vorzunehmende Zahlung zusammen mit Daten, die mitteilen, wie die Zahlung vorgenommen werden soll, an die externe Einheit (9) überträgt.

7. Verfahren gemäß Anspruch 1, **dadurch gekennzeichnet, dass** der zu zahlende Betrag in Form des Codes (5) mittels der Verkäufereinrichtung (3) angezeigt wird.

8. Verfahren gemäß Anspruch 7, **dadurch gekennzeichnet, dass** die externe Einheit (9) aus dem von der Telekommunikationseinrichtung (1) des Käufers übertragenen Code (5) den zu zahlenden Betrag ermittelt.

9. Verfahren gemäß Anspruch 7 oder 8, **dadurch gekennzeichnet, dass** der Code (5) ferner eine Verkäuferidentifikation, die Währung, die akzeptierten Bezahlverfahren, die Verbindungsdaten der externen Einheit (9) und/oder eine Transaktionsidentifikation enthält.

10. Verfahren gemäß einem der Ansprüche 7 bis 9, **dadurch gekennzeichnet, dass** der erfasste Code (5) decodiert und angezeigt wird und der erfasste Code (5) oder aus dem Code (5) abgeleitete Daten von der mobilen Telekommunikationseinrichtung (1) des Käufers an die externe Einheit (9) zum Abwickeln des Bezahlvorgangs nach einer Bestätigung durch den Käufer übertragen wird/werden.

11. Verfahren gemäß einem der Ansprüche 7 bis 10, **dadurch gekennzeichnet, dass** von der Telekommunikationseinheit (1) des Käufers ferner eine Käuferidentifikation, Daten zur Art des Bezahlvorgangs und/oder ein Sicherheitscode übertragen werden.

12. Verfahren gemäß einem der vorstehenden Ansprüche, **dadurch gekennzeichnet, dass** der Code (5) mit einer Digitalkamera (2) fotografiert wird.

13. Verfahren gemäß einem der vorstehenden Ansprüche, **dadurch gekennzeichnet, dass** der Code (5) ein Strichcode ist oder in Symbolform angezeigt wird.

14. Verfahren zum Bezahlen von Produkten, bei welchem der Bezahlvorgang nach einem Verfahren gemäß einem der Ansprüche 1 bis 13 initiiert wird, der Bezahlvorgang mittels der externen Einheit (9) anhand der von der mobilen Telekommunikationseinheit (1) des Käufers übertragenen Daten ausgeführt oder ausgelöst wird und die externe Einrichtung (9) danach eine Bestätigung zumindest an die Verkäufereinrichtung (3) überträgt.

15. Verfahren zum Bezahlen von Produkten gemäß Anspruch 14, **dadurch gekennzeichnet, dass** die externe Einheit (9) eine Verbindung mit dem Finanzinstitut des Käufers oder dem Finanzinstitut des Verkäufers herstellt und eine Überweisung, eine Lastschrift oder einen elektronischen Scheck des in dem Code (5) enthaltenen oder aus dem Code (5) ermittelten Betrags vom Konto des Käufers auf eine Konto des Verkäufers anweist.

16. Verfahren zum Bezahlen von Produkten nach Anspruch 14, **dadurch gekennzeichnet, dass** die externe Einheit (9) eine Kreditkartenbelastung der Kreditkarte des Käufers mit dem in dem Code (5) enthaltenen oder aus dem Code (5) ermittelten Betrag veranlasst.

17. System zum Durchführen eines Bezahlvorgangs für Produkte, **gekennzeichnet durch**:
- eine Anzeigeeinrichtung (4), die einen Code (5), aus dem zumindest der zu zahlende Betrag ermittelbar ist, anzeigt,
- eine optische Erfassungseinrichtung (2) des Käufers, mit welcher der angezeigte Code (5) optisch erfassbar ist,
- eine mobile Telekommunikationseinheit (1) des Käufers, die mit der optischen Erfassungseinrichtung (2) gekoppelt ist und mit welcher der erfasste Code (5) oder aus dem Code (5) abgeleitete Daten drahtlos übertragbar ist/sind, und
- eine externe Einheit (9) zum Abwickeln des Bezahlvorgangs, mit der die von der mobilen Telekommunikationseinheit (1) des Käufers übertragenen Daten empfangbar sind und die mit einer Verkäufereinrichtung (3) zum Übertragen einer Bestätigung des Bezahlvorgangs gekoppelt ist.

18. System gemäß Anspruch 17, **dadurch gekennzeichnet, dass** die optische Erfassungseinrichtung (2) und die mobile Telekommunikationseinrichtung (1) des Käufers in einem Mobiltelefon mit einer Digitalkamera zusammengefasst sind.

19. System gemäß Anspruch 18, **dadurch gekennzeichnet, dass** das Mobiltelefon derart ausgebildet ist, dass eine Installation von Zusatzsoftware möglich ist.
